# EUROPEAN PATENT APPLICATION

(11) **EP 4 506 958 A1**
(43) Date of publication of application: **12.02.2025**
(21) Application number: 23191149.6
(22) Date of filing: 11.08.2023
(51) Int. Cl.: G21B 1/15, G21B 1/23, G21B 1/05

(54) **LASER-CONTROLLED THERMONUCLEAR FUSION FUELING**

(71) Applicant: ASML Netherlands B.V., 5500 AH Veldhoven (NL)
(72) Inventor: MAHAJAN, Sunit, 5500 AH Veldhoven (NL)
(74) Representative: ASML Netherlands B.V.

(57) **Abstract**

A laser controlled thermonuclear refueling system is described. The system comprises an introducer configured to introduce a fuel pellet or pellets into a contained plasma of a thermonuclear fusion reactor; and one or more electromagnetic radiation beams configured to locally impinge upon a surface of the fuel pellet within the contained plasma to propel the pellet in a target direction and/or toward a target location in the contained plasma. This contrasts with prior systems (e.g., where a fuel pellet simply follows the magnetic field gradient with the plasma) and may enhance plasma control for improved stability and thermonuclear fusion energy production, modulate a fusion rate and an amount of energy produced by the reactor, adjust plasma currents to alter magnetic fields and produce electricity by magnetic induction, and/or have other advantages alone or in combination with existing systems.

## Description

### TECHNICAL FIELD

This description relates to laser-controlled thermonuclear fusion fueling, including control and refueling during operation or startup, and providing light sources for lithographic imaging, among other possible applications.

### BACKGROUND

Fusion reactors that produce controlled thermonuclear fusion power are known. An example of such a reactor is the Tokamak nuclear fusion reactor. In a Tokamak, a magnetic field is used to confine a plasma in the shape of a torus. The plasma may be refueled by injecting fuel pellets directly into the plasma with an injector. Typically, an injector is a gas gun that can propel a fuel pellet at up to 3,600km/hr into the plasma core. Once in the plasma core, the fuel pellet trajectory may be affected by the existing temperature, density, and magnetic-field gradient within the plasma as it is consumed. In separate systems, short-wavelength lasers may be used to inertially confine and fuse solid hydrogen pellets by spherically symmetric ablation of the pellet surface. Also, long-wave carbon-dioxide lasers are ineffective for directing a frozen hydrogen pellet by ablative rocket reaction.

### SUMMARY

The present systems, apparatuses, and method utilize the known ablation effect of a shorter-wavelength laser impinging on a solid pellet to direct it thereby, and to fuel or control a thermonuclear fusion plasma. A laser controlled thermonuclear fueling system is described. The system comprises an introducer configured to introduce a fuel pellet or pellets into the plasma volume of a thermonuclear fusion reactor; and one or more electromagnetic radiation beams configured to locally impinge upon a surface of the fuel pellet within the contained plasma to propel the pellet in a target direction and/or toward a target location in the contained plasma. This contrasts with prior systems (e.g., where an injected fuel pellet simply follows the magnetic field gradient with the plasma) and may enhance plasma control for improved stability and thermonuclear fusion energy production, modulate a fusion rate and an amount of energy produced by the reactor, alter mass flows, adjust plasma currents to alter magnetic fields and produce electricity by magnetic induction, and/or have other advantages.

According to an embodiment, a laser controlled thermonuclear refueling system is provided. The system comprises an introducer configured to introduce a fuel pellet into a plasma of a thermonuclear fusion reactor. The system comprises one or more electromagnetic radiation beams configured to locally impinge upon a surface of the fuel pellet within the contained plasma to propel the pellet in a target direction and/or toward a target location in the contained plasma.

In some embodiments, the one or more electromagnetic radiation beams are generated by one or more short wave ultraviolet excimer lasers.

In some embodiments, locally impinging upon the surface of the fuel pellet comprises locally ablating the surface of the fuel pellet.

In some embodiments, the one or more short wave ultraviolet excimer lasers are configured to locally ablate the surface of the fuel pellet to propel the pellet in the target direction toward the target location in the contained plasma to enhance plasma control for improved stability and thermonuclear fusion energy and/or photon production.

In some embodiments, propelling the fuel pellet in the target direction toward the target location in the contained plasma steers the fuel pellet to or toward one or more points of highest and/or critical temperature, pressure, and/or particle flux in the contained plasma to modulate a fusion rate and/or an amount of energy produced by the reactor.

In some embodiments, propelling the fuel pellet in the target direction toward the target location in the contained plasma is configured to adjust plasma currents to alter magnetic fields and produce electricity by magnetic induction.

In some embodiments, locally impinging the surface of the fuel pellet comprises locally ablating and evaporating a material at a point on the surface of the fuel pellet, causing compression, which propels the fuel pellet in the contained plasma, driven by consequent reaction force from material thrown off of or evaporated from the surface of the fuel pellet.

In some embodiments, the system comprises a feedback controller operatively coupled to the introducer and the one or more electromagnetic radiation beams. The feedback controller is configured to operate with the introducer and the one or more electromagnetic radiation beams to controllably propel the fuel pellet.

In some embodiments, the feedback controller comprises one or more sensors configured to generate output signals conveying information related to a position and/or velocity of the fuel pellet in the contained plasma, plasma temperature, plasma magneto hydrodynamics, and/or fusion yield metrics. In some embodiments, the feedback controller comprises one or more processors configured to control the introducer and/or the one or more electromagnetic radiation beams based on the output signals.

In some embodiments, the one or more sensors comprise one or more metrology lasers, an ion probe, and/or a backscattered light photodetector.

In some embodiments, the one or more processors are configured to control the introducer and/or the one or more electromagnetic radiation beams to control a net amount of energy produced, modulate a neutron fluence, control plasma edge or oscillation modes, increase reactor lifetime, and/or enhance overall energy production or consumption efficiency.

In some embodiments, the one or more processors are configured to adjust a direction, focus, or energy of the one or more electromagnetic radiation beams based on the output signals.

In some embodiments, the one or more electromagnetic radiation beams are generated by one or more short wave excimer lasers comprising ArF, KrF, and/or XeF excimer lasers.

In some embodiments, an electromagnetic radiation beam from the one or more short wave excimer lasers is pulsed, with constant or non-constant laser pulse widths ranging from femtosecond to nanosecond.

In some embodiments, the one or more short wave excimer lasers are configured to shape a pulse to enhance or control impingement and a subsequent direction of the fuel pellet.

In some embodiments, a laser beam from the one or more short wave excimer lasers is steady state.

In some embodiments, the fuel pellet comprises a frozen hydrogen isotope, or a mixture thereof.

In some embodiments, the fuel pellet comprises deuterium, tritium, and/or surface layers and/or internal admixtures configured to affect optical or propulsive efficacy.

In some embodiments, the fuel pellet is pre-shaped to enhance a directional propelling of the pellet.

In some embodiments, the fuel pellet has an oblong profile, or a bullet shaped profile, and the one or electromagnetic radiation beams are configured to locally ablate the surface of the fuel pellet at or near a back or rear side of the fuel pellet.

In some embodiments, the one or more electromagnetic radiation beams are configured to locally ablate the surface of the fuel pellet at a first location to propel the fuel pellet in a first direction, and then direct an electromagnetic radiation beam through the fuel pellet to ablate an opposite or adjacent side of the fuel pellet, slowing or stopping propulsion of the fuel pellet in the first direction.

In some embodiments, the one or more electromagnetic radiation beams are further configured for preheating the fuel pellet and/or an environment surrounding the fuel pellet, in preparation for fusion.

In some embodiments, the one or more electromagnetic radiation beams are generated by two short wave excimer lasers, with a first short wave excimer laser of the two short wave excimer lasers configured to locally ablate the surface of the fuel pellet in a first location to propel the pellet in the target direction toward the target location in the contained plasma, and a second short wave excimer laser of the two short wave excimer lasers configured to locally ablate the surface of the fuel pellet in a second location to decelerate or stop movement of the fuel pellet in the contained plasma.

In some embodiments, the one or more electromagnetic radiation beams are generated by a plurality of short wave excimer lasers and configured to trap the fuel pellet at the target location in the contained plasma using multiple laser beams.

In some embodiments, the system comprises a charger configured to electrically charge the fuel pellet with an electron beam or by laser photoionization to affect a trajectory of the fuel pellet in the electric and/or magnetic fields of the contained plasma.

In some embodiments, the one or more electromagnetic radiation beams are generated by a plurality of short wave excimer lasers, with at least one of the plurality of short wave excimer lasers configured for locally adjusting a characteristic of the contained plasma.

In some embodiments, propulsion of the fuel pellet by the one or more electromagnetic radiation beams is configured to be used as a kinetic driver for another fuel pellet in the contained plasma, and/or to adjust moveable elements within the reactor without opening a reactor enclosure.

In some embodiments, the fuel pellet has a laser-reflective surface, and/or is optically shaped such that as the fuel pellet passes an end of an open laser cavity during introduction, laser oscillation is physically triggered, without a specific timing circuit.

In some embodiments, the fuel pellet has a laser-reflective surface, and the laser-reflective surface is configured to be ablated, or if sufficiently robust, configured to be used as a reflector such that the fuel pellet is driven by photon pressure, without ablation.

In some embodiments, the fuel pellet comprises an outer shell formed from C, Au, or Pt.

In some embodiments, a material used to form the outer shell is configured to adjust propulsion of the fuel pellet, and/or add particular impurities to the contained plasma with the material from the fuel pellet.

In some embodiments, the introducer comprises a gas-propelled pipe with the fuel pellet and one or more other pellets, or a laser-driven stack thereof.

In some embodiments, the introducer comprises a hopper of gravity-fed fuel pellets introduced from a top of a reaction chamber.

According to another embodiment, there is provided a laser controlled thermonuclear refueling method comprising one or more of the operations described above.

### BRIEF DESCRIPTION OF THE DRAWINGS

The above aspects and other aspects and features will become apparent to those ordinarily skilled in the art upon review of the following description of specific embodiments in conjunction with the accompanying figures.
Fig. 1A illustrates a base example of pellet plasma injection for deuterium-tritium Tokamak nuclear fusion, according to an embodiment.
Fig. 1B illustrates a second example of pellet plasma injection, according to an embodiment.
Fig. 2 illustrates a laser controlled thermonuclear refueling system, according to an embodiment.
Fig. 3 illustrates a short wave ultraviolet excimer laser generating an electromagnetic radiation beam configured to locally ablate the surface of a fuel pellet to propel the pellet in a target direction toward a target location in a contained plasma, according to an embodiment.
Fig. 4 illustrates an electromagnetic radiation beam locally impinging upon a surface of a fuel pellet within a contained plasma, according to an embodiment.
Fig. 5 illustrates a laser controlled thermonuclear refueling method, according to an embodiment.
Fig. 6 schematically depicts a lithography apparatus, as one possible example use for power or light output from the thermonuclear fusion described herein, according to an embodiment.
Fig. 7 illustrates a schematic representation of holistic lithography, again as one possible example use for power output from the thermonuclear fusion described herein, representing a cooperation between three technologies to optimize semiconductor processing, according to an embodiment.
Fig. 8 is a block diagram of an example computer system, according to an embodiment.
Fig. 9 illustrates an example of a pellet controlled D-T Tokamak EUV lithography light source and system.

### DETAILED DESCRIPTION

Fusion is an energy technology free of direct hydrocarbon combustion that 'burns' atomic nuclei such as hydrogen isotopes to produce, for example, helium nuclei, neutrons, and/or energy. Existing artificial (e.g., Tokamak) controlled thermonuclear fusion reactors are often refueled with frozen fuel pellets injected during operation. The trajectory of these pellets can follow the magnetic field gradient within the reactor plasma. The pellets are not actively directed or controllably steered through the plasma in any way. Fuel pellets are left to drift within the plasma magnetic field gradient, influenced by local density and temperature. However, it would be helpful to actively direct or steer the fuel pellets to specific points within in the plasma to increase the fusion rate and energy produced, for example, or to stabilize the plasma, and/or for other purposes.

The present systems and methods include and/or utilize one or more electromagnetic radiation beams configured to locally impinge upon a surface of a fuel pellet within a contained plasma to propel the pellet in a target direction and/or toward a target location. This contrasts with prior systems where a fuel pellet follows the magnetic field gradient with the plasma. The present systems and methods may enhance plasma control for improved stability and thermonuclear fusion energy production, modulate a fusion rate and an amount of energy produced by the reactor, adjust plasma currents to alter magnetic fields and produce electricity by magnetic induction, and/or have other advantages. For example, alteration of plasma optical properties by laser pulses or residual injected material may alter a direction of subsequent and/or concurrent beams, enabling path-direction of laser energy. For example, one may imagine using the ablation of a pellet to vary the density and refractive index locally, or doing the same with an evaporating pellet. Feedback loops, using sensor measurement of fuel pellet position and/or metrics of fusion yield, may also be used to better control the net energy produced, modulate the neutron fluence, control plasma edge modes, increase the machine lifetime and improve overall efficiency, control plasma density, and/or have other effects.

In an inertial-confinement nuclear fusion reactor (such as the United States National Ignition Facility (NIF) in Livermore, California), a plurality of electromagnetic radiation beams can cause the symmetric compression of nearly-spherical nuclear fuel (e.g., frozen hydrogen-isotope) pellets by laser-driven ablation of the pellet shell. A laser (as one example of an electromagnetic radiation beam) can 'evaporate' material at the surface of the pellet, and spherical inward fuel compression is driven by the consequent symmetric reaction forces from the materials thrown off, as in a rocket. Applying these concepts in a novel way to a thermonuclear fusion Tokamak reactor (for example), an electromagnetic radiation beam may be directed at a fueling and/or refueling pellet that is within or is about to be introduced into the plasma, and the fuel pellet may be steered appropriately to areas of higher temperature and reaction to increase the net fusion rate and/or have other effects at other particular target locations, such as affecting the plasma stability or currents. The electromagnetic radiation beam may also tend to pre-heat the pellet in preparation for fusion. In the present systems and methods, multiple lasers, radiation beams, and/or additional radiation (e.g., light) pulses may be used to further direct a pellet as needed and/or may be used to perform other operations.

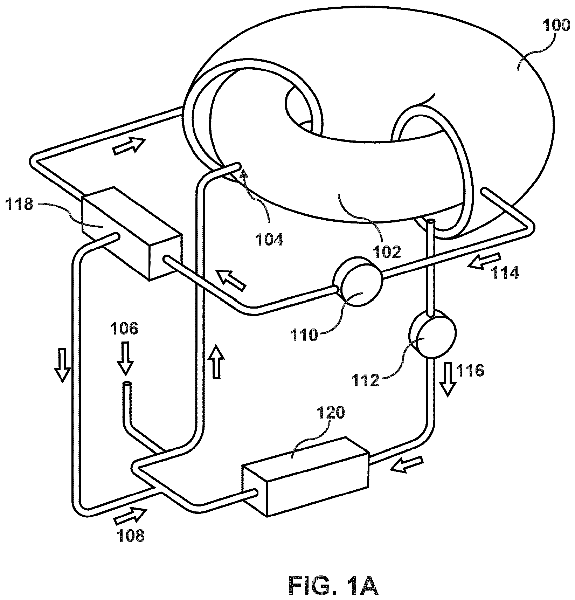

As an introduction, Fig. 1A illustrates a base example of pellet plasma injection for deuterium-tritium Tokamak nuclear fusion. Fig. 1A illustrates a reactor 100 that contains a plasma 102. In this example, reactor 100 and plasma 102 are both shaped as a torus, but other shapes are contemplated. Plasma 102 is re-fueled via deuterium-tritium fuel introduced by an introducer 104. Introducer 104 is configured to inject and/or otherwise introduce the deuterium-tritium fuel it receives from a deuterium supply 106 and/or a tritium supply 108. A blower 110, a vacuum pump 112, and/or other components may be used to facilitate a helium purge gas flow 114, plasma exhaust 116, and/or other flows. A tritium recovery mechanism 118, a deuterium recovery mechanism 120, and/or other components may also be used. For example, in some embodiments, a diverter (not shown in Fig. 1A) may be included at the bottom of reactor 100. The diverter may be configured to facilitate recycling of unconsumed fuel (e.g., by separation from helium generated during fusion, mixing with fresh deuterium and/or tritium, and re-injection). Plasma exhaust may be processed through an isotope separator that extracts fusion fuels also for re-injection.

In some embodiments, introducer 104 may comprise a pellet injector configured to inject frozen deuterium-tritium pellets (in this example) into plasma 102. The pellet injector may comprise a gas gun configured to propel a fuel pellet at up to 3,600km/hr into plasma 102 (e.g., as described above). This propels a fuel pellet deep into plasma 102.

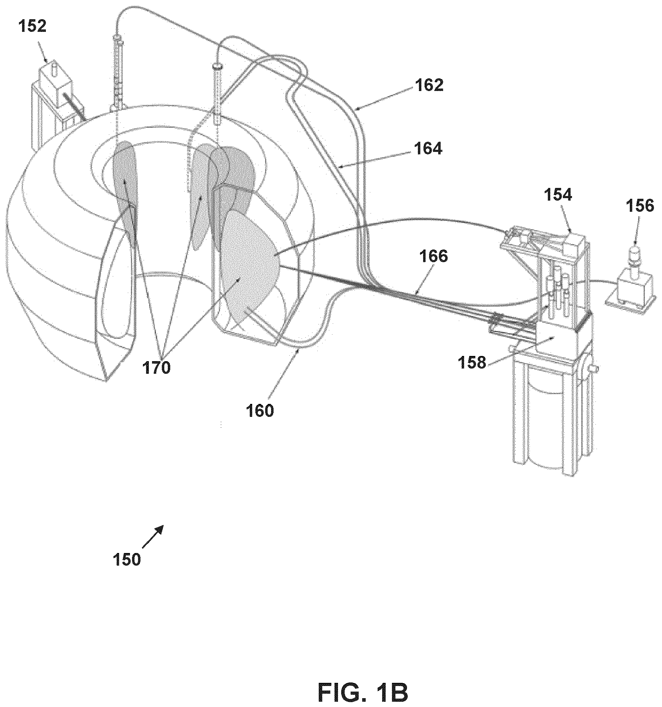

Fig. 1B illustrates a second example of pellet plasma injection. Fig. 1B illustrates a schematic of a system 150 with multiple pellet injectors, and guide tubes used to deliver pellets to plasmas. Fig. 1B illustrates a shattered-pellet injector 152 (one barrel), a shattered-pellet injector 154 (three barrels), and argon pellet injector 156 (one barrel), and a repeating pellet injector 158 (three barrels). Fig. 1B illustrates injection lines 160, and guide tubes 162, 164, 166. Finally, Fig. 1B illustrates plasma cross-sections 170 at injection locations. Other examples are contemplated.

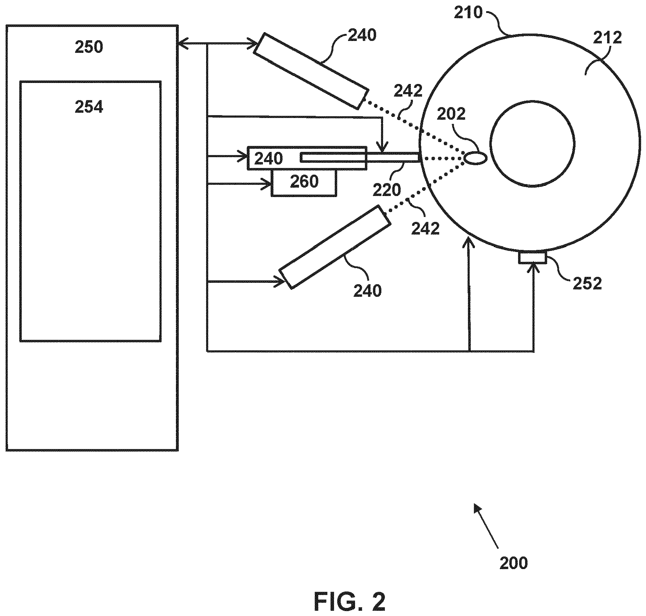

Fig. 2 illustrates a laser-controlled thermonuclear refueling system 200, according to an embodiment. System 200 is configured to introduce a fuel pellet 202 (or one or more fuel pellets 202, though only one is shown in Fig. 2) into a contained plasma 212 of a thermonuclear fusion reactor 210. In some embodiments, system 200 comprises fuel pellet 202, plasma 212, reactor 210, one or more lasers 240, an introducer 220, a feedback controller 250, a charger 260, and/or other components. Each of these components is described in turn below.

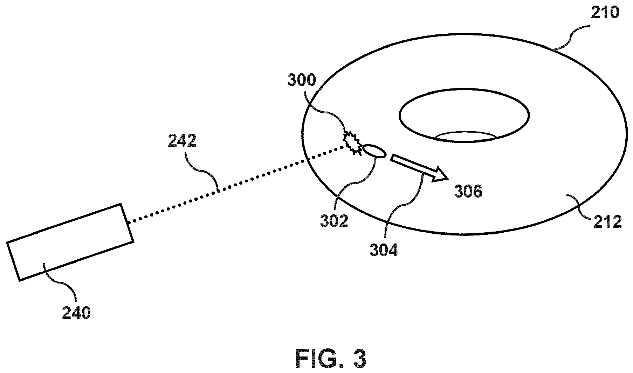

One or more fuel pellets 202 are introduced into contained plasma 212 of thermonuclear fusion reactor 210 with introducer 220. Note that plasma 212 is drawn in Fig. 3 with a confined boundary for ease of visualization by the reader. No such defined boundary is strictly required for a plasma such as plasma 212. Introducer 220 may comprise a gas-propelled pipe with fuel pellet 202 and one or more other pellets, a laser-driven stack thereof, a hopper of gravity-fed fuel pellets introduced from a top of the reaction chamber (of reactor 210), and/or other components. In some embodiments, introducer 220 may be any known mechanical pellet injection or delivery means. In some embodiments, fuel pellet 202 comprises frozen hydrogen, a frozen hydrogen isotope or a mixture thereof, and/or other components. In some embodiments, fuel pellet 202 comprises deuterium tritium, surface layers and/or internal admixtures configured to affect optical or propulsive efficacy, and/or other components. For example, fuel pellet 202 may comprise an outer shell formed from C, Au, Pt, and/or other materials. The material used to form the outer shell may be configured to adjust propulsion of fuel pellet 202, add particular impurities to the contained plasma 212 with the material from the fuel pellet 202, and/or configured for other purposes. Other fusion nuclear fuels are possible and should be considered within the scope of this application if reactor 210 refueling is done by similar pellet-driven mechanisms.

In some embodiments, fuel pellet 202 has a laser-reflective surface, and/or is optically shaped such that as fuel pellet 202 passes an end of an open laser 240 cavity during introduction, laser oscillation is physically triggered without a specific timing circuit. Fuel pellet 202 may have the laser-reflective surface, for example, which is configured to be ablated, or if sufficiently robust, configured to be used as a reflector such that fuel pellet 202 is driven (as described herein) by photon pressure, without ablation. In some embodiments, gas-tube introducers 220 themselves may be configured to guide the laser 240 light. A second laser 240 or multiple beams may be used to steer a moving fuel pellet 202 as it emerges.

One or more lasers 240 are configured to generate corresponding electromagnetic radiation beams 242. The electromagnetic radiation beams may comprise electromagnetic radiation such as visible light, laser light, ultraviolet (UV) radiation, deep UV (DUV) radiation, extreme UV (EUV) radiation, ion beams directed at the surface of the pellet (evaporating part of the surface), acoustic radiation or sound waves (though the plasma is dilute), and/or other radiation. In some embodiments, beams 242 may be introduced by an optical fiber and/or other components. The optical fiber may be passive or amplifying, for example. In some embodiments, electromagnetic radiation beams 242 may be generated by sources other than lasers. Beams 242 are configured to locally impinge upon a surface of fuel pellet 202 within contained plasma 212 to propel pellet 202 in a target direction and/or toward a target location in contained plasma 212. Locally impinging upon the surface of fuel pellet 202 comprises locally ablating the surface of fuel pellet 202 and/or other actions. This occurs within contained plasma 212 to propel pellet 202 in a target direction and/or toward a target location in contained plasma 212. In some embodiments, propelling fuel pellet 202 in the target direction toward the target location in contained plasma 212 steers fuel pellet 202 to or toward one or more points of highest temperature in contained plasma 212 to modulate a fusion rate and an amount of energy produced by reactor 210.

In some embodiments, propelling fuel pellet 202 in the target direction toward the target location in contained plasma 212 is configured to adjust plasma currents to alter magnetic fields and produce electricity by magnetic induction. For example, charged electric currents and magnetic fields within the Tokamak may be varied in time by pellet injection or direction to thereby induce voltages in surrounding coils and/or other components, enabling the extraction of electric power from the plasma. Such currents (AC) may be more suitable to couple to the electric grid directly, without using a steam turbine as is commonly contemplated in thermonuclear fusion reactors. Other advantages are contemplated (e.g., as described herein).

In some embodiments, the one or more electromagnetic radiation beams 242 are generated by a plurality of short wave excimer lasers 240. At least one of the plurality of short wave excimer lasers 240 may be configured for locally adjusting a characteristic such as the refractive index or material density of contained plasma 212. For example, optical excitation of the plasma material may be used to affect local electron concentrations, energy, and/or to influence subsequent and/or concurrent beams directed through the region.

In some embodiments, one or more electromagnetic radiation beams 242 may be generated by one or more short wave ultraviolet excimer lasers 240. One or more short wave ultraviolet excimer lasers 240 may comprise ArF, KrF, XeF, and/or other excimer lasers, for example. In some embodiments, ArF laser irradiation (as one example) may develop higher ablation pressures than carbon dioxide (CO₂) lasers, and can be focused to a more uniform spot, among other advantages. The ablation pressure may increase with decreasing wavelength because the cooler ArF-generated plasma wastes less energy. This may increase the pellet-rocket performance compared to using carbon-dioxide (CO₂) longwave laser beams. CO₂ laser driving of pellets may not work for fusion at all, due to insufficient electron thermal conductivity at the laser-plasma-pellet boundary and/or for other reasons.

In some embodiments, an electromagnetic radiation beam 242 from the one or more short wave ultraviolet excimer lasers 240 may be pulsed, with constant or non-constant laser pulse widths ranging from femtosecond to nanosecond, for example. In some embodiments, a laser beam (e.g., a beam 242) from the one or more short wave ultraviolet excimer lasers 240 is steady state. One or more short wave ultraviolet excimer lasers 240 may be configured to locally ablate the surface of fuel pellet 202 to propel pellet 202 in the target direction toward the target location in contained plasma 212 to enhance plasma control for improved stability and thermonuclear fusion energy production, and/or for other purposes (e.g., as described herein).

For example, Fig. 3 illustrates a short wave ultraviolet excimer laser 240 generating an electromagnetic radiation beam 242 configured to locally ablate 300 the surface of a fuel pellet 302 to propel pellet 302 in a target direction 304 toward a target location 306 in contained plasma 212. As described herein, this may enhance plasma 212 control for improved stability and thermonuclear fusion energy production, and/or for other purposes. For example, a nuclear fusion rate is a strong function of temperature and density. Too dense a plasma increases bremsstrahlung losses and to dilute a fuel reduces the energy produced and makes helium heating ineffective. For deuterium-tritium (D-T) fusion (as considered here, for example) often used in Tokamaks (described above), the product of the density, confinement time, and temperature may be greater than 5 × 10²¹ s^{∗}keV/m^3 for ignition. The reactor 210 pressure is about a millionth of an Earth atmosphere. Regions of ignition may be expected to be small, as the outward neutron, particle and neutrino flux would be expected to cool the reacting plasma 212. The density of frozen hydrogen pellets (e.g., pellet 302 in this example) may be well in excess of the plasma density, by a factor of about 73 million for example, and the temperature is lower by a factor of about 300,000. The Lawson criterion requires a certain pressure and confinement time for D-T fusion of 5-bar*s. One could estimate that supplying a dense pellet 302 to a reacting area and heating it up to the appropriate temperature would enhance the fusion rate until the hydrogen isotopes dispersed. In some embodiments, the ratio of the density excess to the temperature deficit could be governing, and this factor may be roughly 200.

Returning to Fig. 2, in some embodiments, locally impinging the surface of fuel pellet 202 comprises locally ablating and evaporating a material at a point on the surface of fuel pellet 202, causing compression, which propels fuel pellet 202 in contained plasma 212, driven by consequent reaction force from material thrown off of or evaporated from the surface of fuel pellet 202.

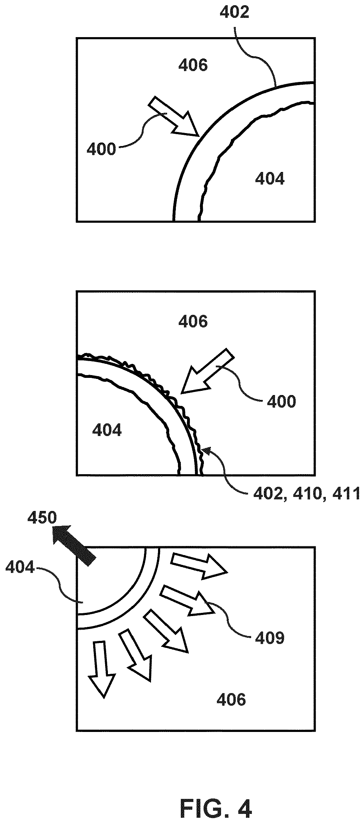

For example, Fig. 4 illustrates an electromagnetic radiation beam 400 (which may be similar to and/or the same as beam(s) 242 described above) locally impinging upon a surface 402 of a fuel pellet 404 (which may be similar to and/or the same as a pellet 202 described above) within a contained plasma 406 (which may be similar to and/or the same as plasma 212 described above). This facilitates locally ablating 409 and evaporating 411 a material at a point on the surface 402 of fuel pellet 404, and causing compression 410, which propels 420 fuel pellet 404 in contained plasma 406, driven by consequent reaction force from material thrown off of or evaporated from the surface 402 of fuel pellet 404. Note that the different images of Fig. 4 rotate clockwise as pellet 404 progresses from laser impingement to compression to propulsion. As the drawings of Fig. 4 move through the sequence, the laser beam illumination (e.g., 400), and the ablation (e.g., 409), cause motion, with arrow 450 indicating the direction of induced motion. For clarity, the resultant motion arrow 450 is drawn opposing the prior ablation direction, and along the direction of the incident light, to emphasize the 'action-reaction' mechanism described herein.

Again returning to Fig. 2, in some embodiments, one or more short wave ultraviolet excimer lasers 240 are configured to shape a pulse to enhance or control impingement and a subsequent direction of fuel pellet 202. Shaping of a pulse may enhance or control ablation and subsequent direction, for example. In some embodiments, one or more electromagnetic radiation beams 242 are generated by a plurality of short wave excimer lasers 240 and are configured to trap a fuel pellet 202 at the target location in contained plasma 212 using multiple laser beams 242. In some embodiments, propulsion of fuel pellet 202 by one or more electromagnetic radiation beams 242 is configured to be used as a kinetic driver for another fuel pellet in contained plasma 212, and/or to adjust moveable elements within reactor 210 without opening a reactor 210 enclosure.

Feedback controller 250 is configured to controllably propel (or cause controlled propulsion of) pellet 202 within contained plasma 212. Controllably propelling the fuel pellet may be performed with feedback controller 250 operatively coupled to introducer 220, lasers 240 which are configured to generate the one or more electromagnetic radiation beams 242, and/or other components. Feedback controller 250 is configured to operate in conjunction with introducer 220 and the (lasers 240 that generate the) one or more electromagnetic radiation beams 242. In some embodiments, feedback controller 250 comprises one or more sensors 252, one or more processors 254, and/or other components.

One or more sensors 252 are configured to generate output signals conveying information related to a position of fuel pellet 202 in contained plasma 212, plasma 212 temperature, plasma 212 magneto-hydrodynamics, fusion yield metrics, and/or other information. For example, one or more sensors 252 may comprise one or more metrology lasers, an ion probe, a backscattered light (photons) photodetector (including x-ray detection), and/or other sensors. One or more of these sensors may be configured such that an output signal comprises an electrical signal for one or more processors 254 and/or another computer system.

One or more processors 254 are configured to control introducer 220, the (laser(s) 240 that generate the) one or more electromagnetic radiation beams 242, and/or other components, based on the output signals, reactor power requirements, and/or other information. For example, one or more processors 254 may be configured to control introducer 220 and/or the (laser(s) 240 that generate the) one or more electromagnetic radiation beams 242 to control a net amount of energy produced, modulate a neutron fluence, control plasma edge or oscillation modes, increase reactor lifetime, enhance overall energy production or consumption efficiency, and/or other factors. In some embodiments, one or more processors 254 are configured to adjust a direction, focus, energy, and/or other characteristics of the one or more electromagnetic radiation beams 242 based on the output signals and/or other information.

In some embodiments, a fuel pellet 202 is pre-shaped to enhance a directional propelling of the pellet. For example, a fuel pellet 202 may have an oblong profile, a bullet shaped profile, and/or other profiles, and (e.g., feedback controller 250 is configured to control the one or more lasers 240 such that) the one or electromagnetic radiation beams 242 are configured to locally ablate the surface of fuel pellet 202 at or near a back or rear side of fuel pellet 202. In some embodiments, the one or more electromagnetic radiation beams 242 are configured to (e.g., feedback controller 250 is configured to control the one or more lasers 240 to) locally ablate the surface of fuel pellet 202 at a first location to propel fuel pellet 202 in a first direction, and then direct an electromagnetic radiation beam 242 through fuel pellet 202 to ablate an opposite or adjacent side of fuel pellet 202, slowing or stopping propulsion of fuel pellet 202 in the first direction. In some embodiments, the one or more electromagnetic radiation beams 242 are generated by two short wave excimer lasers 240, with a first short wave excimer laser of the two short wave excimer lasers configured to locally ablate the surface of fuel pellet 202 in a first location to propel pellet 202 in the target direction toward the target location in contained plasma 212, and a second short wave excimer laser of the two short wave excimer lasers configured to locally ablate the surface of fuel pellet 202 in a second location to decelerate or stop movement of fuel pellet 202 in contained plasma 212.

In some embodiments, system 200 is configured to pre-heat, with the one or more electromagnetic radiation beams 242, fuel pellet 202 and/or an environment surrounding fuel pellet 202, in preparation for fusion. In some embodiments, system 200 is configured to charge, with charger 260 (e.g., comprising an electron beam or laser photoionization), fuel pellet 202 to affect a trajectory of fuel pellet 202 in the electric and/or magnetic fields of contained plasma 212. Electrons are removed from the pellet with high-photon energy laser radiation, such that the charged pellet may then be influenced by electric fields existing or induced within the plasma. Removal of an electron from hydrogen needs about 13.6eV of energy, so 91.2nm laser light, or smaller wavelength. The radiation may be pulsed or continuous, for example. Feedback controller 250 may be in communication with a laser 240, charger 260, and/or other components of system 200 to facilitate these and/or other operations.

In some embodiments, feedback controller 250 comprises one or more components (and/or is configured to control one or more such components) to support and/or move one or more lasers 240, introducer 220, and/or other components of system 200 such that one or more beams 242 impinge upon fuel pellet 202 as described. For example, feedback controller 250 may include and/or control one or more positioners with one or more pins, tables, chucks, clips, clamps, and/or other components configured to support and/or otherwise hold a laser 240, introducer 220, etc.. A positioner may be configured to move in multiple dimensions by translating, tilting, rotating, and/or moving in other ways. In some embodiments, a positioner comprises a motorized stage configured to translate in an X, Y, and/or Z direction; and/or rotate in an Rx, Ry, and/or Rz direction, for example. A beam-steering mechanism may be controlled by feedback controller 250 and involve deflection, refraction, diffraction, imaging optics, and/or incidence on other pellets and/or fixed or moveable surfaces within the reactor.

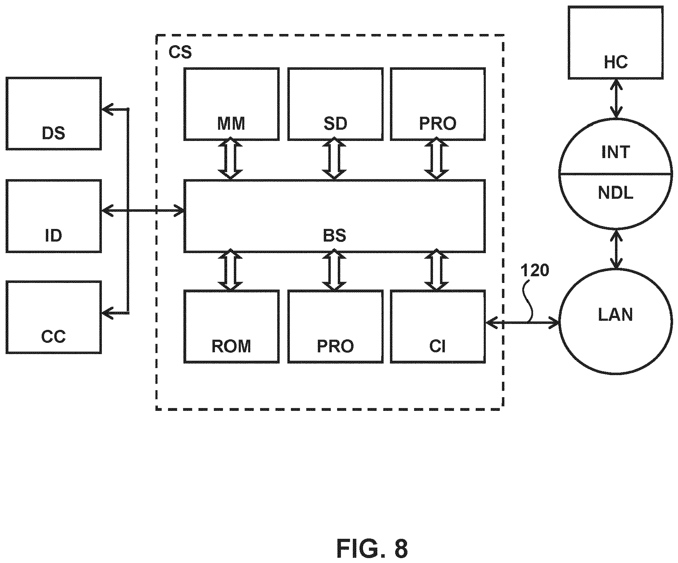

As described above, feedback controller 250 may be configured to control one or more components of system 200 based on output signals from sensor 252 and/or other information. This control may include adjustments made based on a target output signal and/or such that an output signal from a sensor 252 matches a target output signal, for example. In some embodiments, the target output signal may comprise an expected output signal, an acceptable output signal range, and/or other target output signal. The controlling is performed with one or more processors 254 configured by machine readable instructions based on the output signal(s) from sensor(s) 252 and/or other information (see Fig. 8 and computer system CS described below for further explanation related to the one or more processors).

In some embodiments, an output signal from a sensor 252 (and/or combination of sensors 252) and/or a deviation of the output signal from a target output signal relative to one or more control commands from feedback controller 250 is configured to be used as a feedback signal by one or more processors 254 to monitor fusion. Feedback controller 250 is configured to generate one or more control signals for controlling various components of system 200 based on the feedback signal and/or other information.

In some embodiments, a separated portion of the plasma itself may, if population-inverted, amplify incoming laser radiation. For ArF*, a high-pressure cell of He, SF6, Ar and F may work, for example. For KrF*, Kr could be used in place of Ar. The amplifying cell could be inductively excited by the same discharge as the Tokamak. Two or more laser-reflective pellets introduced into a population-inverted region may allow propagation of laser modes between them, driving them apart by photon pressure. Joint placement of the pellets could then control their final velocities. Shaping of the pellet reflective surfaces (as described above) could control the modes excited and the power delivered. Conceptually, the pellets themselves can be used as resonator 'mirrors' for a laser beam.

In some embodiments, the components of system 200 communicate unidirectionally and/or bidirectionally with each other and/or other devices such as mobile user devices, a desk-top user device, external resources such as a server, and/or other devices. Each of these devices may communicate wirelessly and/or via wires. For example, each of these devices may communicate via a network, such as the Internet or the Internet in combination with various other networks, like local area networks, cellular networks, Wi-Fi networks, or personal area networks.

Mobile user devices may be smart phones, tablets, or other hand-held networked computing devices having a display, a user input device (e.g., buttons, keys, voice recognition, or a single or multi-touch touchscreen), memory (such as a tangible, machine-readable, non-volatile memory), a network interface, a portable energy source (e.g., a battery), and a processor (a term which, as used herein, includes one or more processors) coupled to each of these components. The memory of mobile user devices may store instructions that when executed by the associated processor provide an operating system and various applications, including a web browser or a native mobile application. The desktop user device may also include a web browser, for example. In addition, a desktop user device may include a monitor; a keyboard; a mouse; memory; a processor; and a tangible, non-transitory, machine-readable memory storing instructions that when executed by the processor provide an operating system and the web browser. Native applications and web browsers, in some embodiments, are operative to provide a graphical user interface associated with a user, for example, that communicates with system 200 and facilitates user interaction with data from system 200.

External resources, in some embodiments, include sources of information such as databases, websites, etc.; external entities participating with system 200 (e.g., systems or networks associated with reactor 210); one or more servers outside of the system 200; a network (e.g., the internet); electronic storage; equipment related to Wi-Fi ^{™} technology; equipment related to Bluetooth^{®} technology; data entry devices; or other resources. In some implementations, some or all of the functionality attributed herein to external resources may be provided by resources included in system 200. External resources may be configured to communicate with one or more components of system 200 via wired and/or wireless connections, via a network (e.g., a local area network and/or the internet), via cellular technology, via Wi-Fi technology, and/or via other resources.

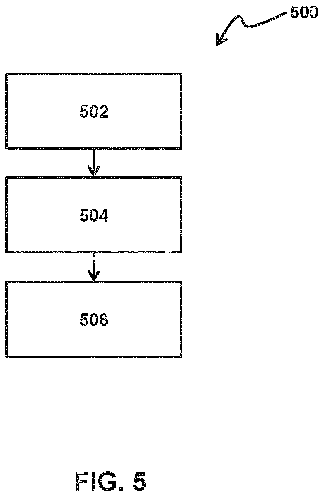

Fig. 5 illustrates a laser controlled thermonuclear refueling method 500. Fig. 5 illustrates a sequence of actions, none limiting, describing a method of laser-directed pellet fusion plasma fueling and/or control. In some embodiments, one or more operations of method 500 may be implemented in or by system 200 illustrated in Fig. 2, a computer system (e.g., as illustrated in Fig. 8 and described below), and/or in or by other systems, for example. In some embodiments, method 500 comprises introducing a fuel pellet into a contained plasma of a thermonuclear fusion reactor (operation 502), locally impinging one or more electromagnetic radiation beams upon a surface of the fuel pellet within the contained plasma to propel the pellet in a target direction and/or toward a target location in the contained plasma (operation 504), controlling the propelling of the fuel pellet (operation 506), and/or other operations. The operations of method 500 are intended to be illustrative. In some embodiments, method 500 may be accomplished with one or more additional operations not described, and/or without one or more of the operations discussed. Additionally, the order in which the operations of method 500 are illustrated in Fig. 5 and described herein is not intended to be limiting.

In some embodiments, one or more portions of method 500 may be implemented in and/or controlled by one or more processing devices (e.g., a digital processor, an analog processor, a digital circuit designed to process information, an analog circuit designed to process information, a state machine, and/or other mechanisms for electronically processing information). The processing devices may be or be included in a computer system such as a desktop computer, a laptop computer, a smartphone, a server, and/or other computing devices, for example. The one or more processing devices may include one or more devices executing some or all of the operations of method 500 in response to instructions stored electronically on an electronic storage medium. The one or more processing devices may include one or more devices configured through hardware, firmware, and/or software to be specifically designed for execution of one or more of the operations of method 500.

At operation 502, one or more fuel pellets are introduced into a contained plasma of a thermonuclear fusion reactor with an introducer. The introducer may comprise a gas-propelled pipe with the fuel pellet and one or more other pellets, a laser-driven stack thereof, a hopper of gravity-fed fuel pellets introduced from a top of a reaction chamber (reactor), and/or other components. In some embodiments, a fuel pellet comprises frozen hydrogen, a frozen hydrogen isotope or a mixture thereof, and/or other components. In some embodiments, the fuel pellet comprises deuterium tritium, surface layers and/or internal admixtures configured to affect optical or propulsive efficacy, and/or other components such as Xenon (Xe) for the production of extreme ultraviolet (soft x-ray) light for lithography purposes. For example, a fuel pellet may comprise an outer shell formed from C, Au, Pt, and/or other materials. The material used to form the outer shell may be configured to adjust propulsion of the fuel pellet, add particular impurities to the contained plasma with the material from the fuel pellet, and/or configured for other purposes. Other fusion nuclear fuels are possible and should be considered within the scope of this application if reactor refueling is done by similar pellet-driven mechanisms.

In some embodiments, the fuel pellet has a laser-reflective surface, and/or is optically shaped such that as the fuel pellet passes an end of an open laser cavity during introduction, laser oscillation is physically triggered without a specific timing circuit. The fuel pellet may have the laser-reflective surface, for example, which is configured to be ablated, or if sufficiently robust, configured to be used as a reflector such that the fuel pellet is driven (as described herein) by photon pressure, without ablation. In some embodiments, operation 502 is performed by an introducer similar to and/or the same as introducer 220 shown in Fig. 2.

At operation 504, a surface of a fuel pellet is locally impinged upon with one or more electromagnetic radiation beams. Locally impinging upon the surface of the fuel pellet comprises locally ablating the surface of the fuel pellet and/or other actions. This occurs within the contained plasma to propel the pellet in a target direction and/or toward a target location in the contained plasma. In some embodiments, propelling the fuel pellet in the target direction toward the target location in the contained plasma steers the fuel pellet to or toward one or more points of highest temperature in the contained plasma to modulate a fusion rate and an amount of energy produced by the reactor. In some embodiments, propelling the fuel pellet in the target direction toward the target location in the contained plasma is configured to adjust plasma currents to alter magnetic fields and produce electricity by magnetic induction.

In some embodiments, the one or more electromagnetic radiation beams are generated by a plurality of short wave excimer lasers, with at least one of the plurality of short wave excimer lasers configured for locally adjusting a characteristic of the contained plasma. The one or more electromagnetic radiation beams may be generated by one or more short wave ultraviolet excimer lasers. The one or more short wave ultraviolet excimer lasers may comprise ArF, KrF, XeF, and/or other excimer lasers. In some embodiments, an electromagnetic radiation beam from the one or more short wave ultraviolet excimer lasers may be pulsed, with constant or non-constant laser pulse widths ranging from femtosecond to nanosecond, for example. In some embodiments, a laser beam from the one or more short wave ultraviolet excimer lasers is steady state.

The one or more short wave ultraviolet excimer lasers may be configured to locally ablate the surface of the fuel pellet to propel the pellet in the target direction toward the target location in the contained plasma to enhance plasma control for improved stability and thermonuclear fusion energy production and/or for other purposes. In some embodiments, locally impinging the surface of the fuel pellet comprises locally ablating and evaporating a material at a point on the surface of the fuel pellet, causing compression, which propels the fuel pellet in the contained plasma, driven by consequent reaction force from material thrown off of or evaporated from the surface of the fuel pellet.

In some embodiments, the one or more short wave ultraviolet excimer lasers are configured to shape a pulse to enhance or control impingement and a subsequent direction of the fuel pellet. Shaping of a pulse may enhance or control ablation and subsequent direction, for example. In some embodiments, the one or more electromagnetic radiation beams are generated by a plurality of short wave excimer lasers and are configured to trap a fuel pellet at the target location in the contained plasma using multiple laser beams. In some embodiments, propulsion of the fuel pellet by the one or more electromagnetic radiation beams is configured to be used as a kinetic driver for another fuel pellet in the contained plasma, and/or to adjust moveable elements within the reactor without opening a reactor enclosure. In some embodiments, operation 504 is performed by one or more electromagnetic radiation beams similar to and/or the same as the radiation beams generated by lasers 240 shown in Fig. 2.

At operation 506, the fuel pellet is controllably propelled within the contained plasma. Controllably propelling the fuel pellet may be performed with a feedback controller operatively coupled to the introducer and the one or more electromagnetic radiation beams, and/or other components. The feedback controller is configured to operate with the introducer and the (lasers that generate the) one or more electromagnetic radiation beams. The feedback controller comprises one or more sensors, one or more processors, and/or other components.

The one or more sensors are configured to generate output signals conveying information related to a position of the fuel pellet in the contained plasma, plasma temperature, plasma magneto hydrodynamics, fusion yield metrics, and/or other information. For example, the one or more sensors may comprise one or more metrology lasers, an ion probe, a backscattered light (photon) photodetector (including x-ray detection), and/or other sensors.

The one or more processors are configured to control the introducer, the (laser(s) that generate the) one or more electromagnetic radiation beams, and/or other components, based on the output signals and/or other information. For example, the one or more processors may be configured to control the introducer and/or the (laser(s) that generate the) one or more electromagnetic radiation beams to control a net amount of energy produced, modulate a neutron fluence, control plasma edge or oscillation modes, increase reactor lifetime, enhance overall energy production or consumption efficiency, and/or other factors. In some embodiments, the one or more processors are configured to adjust a direction, focus, energy, and/or other characteristics of the one or more electromagnetic radiation beams based on the output signals and/or other information. In some embodiments, operation 506 is performed by a feedback controller similar to and/or the same as feedback controller 250 shown in Fig. 2, which may be and/or include a computer system comprising one or more processors similar to and/or the same as computer system CS shown in Fig. 8.

In some embodiments, a fuel pellet is pre-shaped to enhance a directional propelling of the pellet. For example, a fuel pellet may have an oblong profile, a bullet shaped profile, and/or other profiles, and the one or electromagnetic radiation beams (described above and below) are configured to locally ablate the surface of the fuel pellet at or near a back or rear side of the fuel pellet.

In some embodiments, the one or more electromagnetic radiation beams are configured to (e.g., the feedback controller is configured to control the one or more lasers to) locally ablate the surface of the fuel pellet at a first location to propel the fuel pellet in a first direction, and then direct an electromagnetic radiation beam through the fuel pellet to ablate an opposite or adjacent side of the fuel pellet, slowing or stopping propulsion of the fuel pellet in the first direction. In some embodiments, the one or more electromagnetic radiation beams are generated by two short wave excimer lasers, with a first short wave excimer laser of the two short wave excimer lasers configured to locally ablate the surface of the fuel pellet in a first location to propel the pellet in the target direction toward the target location in the contained plasma, and a second short wave excimer laser of the two short wave excimer lasers configured to locally ablate the surface of the fuel pellet in a second location to decelerate or stop movement of the fuel pellet in the contained plasma.

In some embodiments, method 500 comprises preheating, with the one or more electromagnetic radiation beams, the fuel pellet and/or an environment surrounding the fuel pellet, in preparation for fusion.

In some embodiments, method 500 comprises charging, with a charger comprising an electron beam or laser photoionization, the fuel pellet to affect a trajectory of the fuel pellet in magnetic fields of the contained plasma.

Power, energy, and/or radiation outputs from thermonuclear fusion, and/or systems and methods for refueling such systems (e.g., as described above) have a multitude of potential applications. Possible applications include the generation of AC electric power, heat, light and/or the production of transmuted materials. Replacement of fossil-fuel power stations and reductions in carbon dioxide (CO₂) emission and consequent global warming are contemplated. One particular potential application is in semiconductor manufacturing. The description below relates to semiconductor device manufacturing and patterning processes, which may use power output from the systems and/or the methods described above for a patterning process. Further, EUV or other optical radiation from the plasma may be conceivably coupled into a lithography apparatus; emitted x-rays may be used as sources for inspection systems; and/or other semiconductor related applications may be possible.

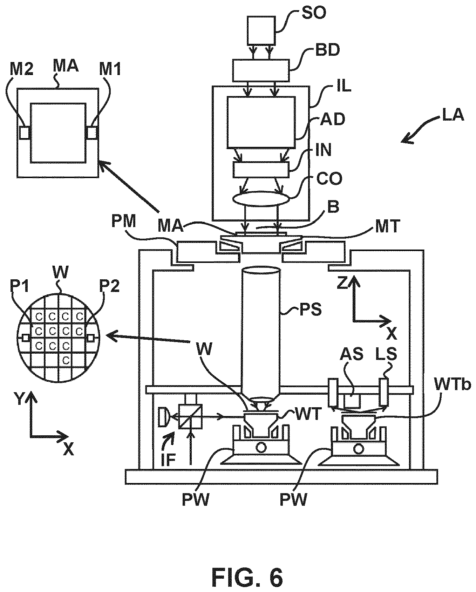

Fig. 6 schematically depicts an embodiment of a lithographic apparatus LA. Fig. 6 shows a generic transmissive lithography apparatus. It should be noted that reflective or other variations on the system are possible, as are 'one-stage' machines. The apparatus LA comprises an illumination system (illuminator) IL configured to condition a radiation beam B (e.g. UV radiation, DUV radiation, or EUV radiation); a support structure (e.g. a mask table) MT constructed to support a patterning device (e.g. a mask) MA and connected to a first positioner PM configured to accurately position the patterning device in accordance with certain parameters; a substrate table (e.g. a wafer table) WT (e.g., WTa, WTb or both) configured to hold a substrate (e.g. a resist-coated wafer) W and coupled to a second positioner PW configured to accurately position the substrate in accordance with certain parameters; and a projection system (e.g. a refractive projection lens system) PS configured to project a pattern imparted to the radiation beam B by patterning device MA onto a target portion C (e.g. comprising one or more dice and often referred to as fields) of the substrate W. The projection system is supported on a reference frame RF. As depicted, the apparatus is of a transmissive type (e.g. employing a transmissive mask). Alternatively, the apparatus may be of a reflective type (e.g. employing a programmable mirror array, or employing a reflective mask).

The illuminator IL receives a beam of radiation from a radiation source SO. The source and the lithographic apparatus may be separate entities, for example when the source is an excimer laser. In such cases, the source is not considered to form part of the lithographic apparatus and the radiation beam is passed from the source SO to the illuminator IL with the aid of a beam delivery system BD comprising for example suitable directing mirrors and/or a beam expander. In other cases, the source may be an integral part of the apparatus, for example when the source is a mercury lamp. The source SO and the illuminator IL, together with the beam delivery system BD if required, may be referred to as a radiation system.

The illuminator IL may alter the intensity distribution of the beam. The illuminator may be arranged to limit the radial extent of the radiation beam such that the intensity distribution is non-zero within an annular region in a pupil plane of the illuminator IL. Additionally or alternatively, the illuminator IL may be operable to limit the distribution of the beam in the pupil plane such that the intensity distribution is non-zero in a plurality of equally spaced sectors in the pupil plane. The intensity distribution of the radiation beam in a pupil plane of the illuminator IL may be referred to as an illumination mode.

The illuminator IL may comprise adjuster AD configured to adjust the (angular / spatial) intensity distribution of the beam. Generally, at least the outer and/or inner radial extent (commonly referred to as σ-outer and σ-inner, respectively) of the intensity distribution in a pupil plane of the illuminator can be adjusted. The illuminator IL may be operable to vary the angular distribution of the beam. For example, the illuminator may be operable to alter the number, and angular extent, of sectors in the pupil plane wherein the intensity distribution is non-zero. By adjusting the intensity distribution of the beam in the pupil plane of the illuminator, different illumination modes may be achieved. For example, by limiting the radial and angular extent of the intensity distribution in the pupil plane of the illuminator IL, the intensity distribution may have a multi-pole distribution such as, for example, a dipole, quadrupole or hexapole distribution. A desired illumination mode may be obtained, e.g., by inserting an optic which provides that illumination mode into the illuminator IL or using a spatial light modulator.

The illuminator IL may be operable to alter the polarization of the beam and may be operable to adjust the polarization using adjuster AD. The polarization state of the radiation beam across a pupil plane of the illuminator IL may be referred to as a polarization mode. The use of different polarization modes may allow greater contrast to be achieved in the image formed on the substrate W. The radiation beam may be unpolarized. Alternatively, the illuminator may be arranged to linearly polarize the radiation beam. The polarization direction of the radiation beam may vary across a pupil plane of the illuminator IL. The polarization direction of radiation may be different in different regions in the pupil plane of the illuminator IL. The polarization state of the radiation may be chosen in dependence on the illumination mode. For multi-pole illumination modes, the polarization of each pole of the radiation beam may be generally perpendicular to the position vector of that pole in the pupil plane of the illuminator IL. For example, for a dipole illumination mode, the radiation may be linearly polarized in a direction that is substantially perpendicular to a line that bisects the two opposing sectors of the dipole. The radiation beam may be polarized in one of two different orthogonal directions, which may be referred to as X-polarized and Y-polarized states. For a quadrupole illumination mode, the radiation in the sector of each pole may be linearly polarized in a direction that is substantially perpendicular to a line that bisects that sector. This polarization mode may be referred to as XY polarization. Similarly, for a hexapole illumination mode the radiation in the sector of each pole may be linearly polarized in a direction that is substantially perpendicular to a line that bisects that sector. This polarization mode may be referred to as TE polarization.

In addition, the illuminator IL generally comprises various other components, such as an integrator IN and a condenser CO. The illumination system may include various types of optical components, such as refractive, reflective, magnetic, electromagnetic, electrostatic, or other types of optical components, or any combination thereof, for directing, shaping, or controlling radiation. Thus, the illuminator provides a conditioned beam of radiation B, having a desired uniformity and intensity distribution in its cross section.

The support structure MT supports the patterning device in a manner that depends on the orientation of the patterning device, the design of the lithographic apparatus, and other conditions, such as for example whether or not the patterning device is held in a vacuum environment. The support structure may use mechanical, vacuum, electrostatic or other clamping techniques to hold the patterning device. The support structure may be a frame or a table, for example, which may be fixed or movable as required. The support structure may ensure that the patterning device is at a desired position, for example with respect to the projection system. Any use of the terms "reticle" or "mask" herein may be considered synonymous with the more general term "patterning device."

A patterning device may be transmissive or reflective. Examples of patterning devices include masks, programmable mirror arrays, and programmable LCD panels. Masks are well known in lithography, and include mask types such as binary, alternating phase-shift, and attenuated phase-shift, as well as various hybrid mask types. An example of a programmable mirror array employs a matrix arrangement of small mirrors, each of which can be individually tilted to reflect an incoming radiation beam in different directions. The tilted mirrors impart a pattern in a radiation beam, which is reflected by the mirror matrix.

The projection system PS may comprise a plurality of optical (e.g., lens) elements and may further comprise an adjustment mechanism configured to adjust one or more of the optical elements to correct for aberrations (phase variations across the pupil plane throughout the field). To achieve this, the adjustment mechanism may be operable to manipulate one or more optical (e.g., lens) elements within the projection system PS in one or more different ways. The projection system may have a coordinate system wherein its optical axis extends in the z direction. The adjustment mechanism may be operable to do any combination of the following: displace one or more optical elements; tilt one or more optical elements; and/or deform one or more optical elements. Displacement of an optical element may be in any direction (x, y, z, or a combination thereof). Tilting of an optical element is typically out of a plane perpendicular to the optical axis, by rotating about an axis in the x and/or y directions although a rotation about the z axis may be used for a non-rotationally symmetric aspherical optical element. Deformation of an optical element may include a low frequency shape (e.g. astigmatic) and/or a high frequency shape (e.g. free form aspheres). Deformation of an optical element may be performed for example by using one or more actuators to exert force on one or more sides of the optical element and/or by using one or more heating elements to heat one or more selected regions of the optical element. In general, it may not be possible to adjust the projection system PS to correct for apodization (transmission variation across the pupil plane). The transmission map of a projection system PS may be used when designing a patterning device (e.g., mask) MA for the lithography apparatus LA. Using a computational lithography technique, the patterning device MA may be designed to at least partially correct for apodization.

The lithographic apparatus may be of a type having two (dual stage) or more tables (e.g., two or more substrate tables WTa, WTb, two or more patterning device tables, a substrate table WTa and a table WTb below the projection system without a substrate that is dedicated to, for example, facilitating measurement, and/or cleaning, etc.). In such "multiple stage" machines, the additional tables may be used in parallel, or preparatory steps may be conducted on one or more tables while one or more other tables are being used for exposure. For example, alignment measurements using an alignment sensor AS and/or level (height, tilt, etc.) measurements using a level sensor LS may be made.

In operation of the lithographic apparatus LA, a radiation beam is conditioned and provided by the illumination system IL. The radiation beam B is incident on the patterning device (e.g., mask) MA, which is held on the support structure (e.g., mask table) MT, and is patterned by the patterning device. Having traversed the patterning device MA, the radiation beam B passes through the projection system PS, which focuses the beam onto a target portion C of the substrate W. With the aid of the second positioner PW and position sensor IF (e.g. an interferometric device, linear encoder, 2-D encoder, or capacitive sensor), the substrate table WT can be moved accurately, e.g. to position different target portions C in the path of the radiation beam B. Similarly, the first positioner PM and another position sensor (which is not explicitly depicted in Fig. 4) can be used to accurately position the patterning device MA with respect to the path of the radiation beam B, e.g. after mechanical retrieval from a mask library, or during a scan. In general, movement of the support structure MT may be realized with the aid of a long-stroke module (coarse positioning) and a short-stroke module (fine positioning), which form part of the first positioner PM. Similarly, movement of the substrate table WT may be realized using a long-stroke module and a short-stroke module, which form part of the second positioner PW. In the case of a stepper (as opposed to a scanner), the support structure MT may be connected to a short-stroke actuator only, or may be fixed. Patterning device MA and substrate W may be aligned using patterning device alignment marks M1, M2 and substrate alignment marks P1, P2. Although the substrate alignment marks as illustrated occupy dedicated target portions, they may be located in spaces between target portions (these are known as scribe-lane alignment marks). Similarly, in situations in which more than one die is provided on the patterning device MA, the patterning device alignment marks may be located between the dice.

The substrate may be processed, before or after exposure, in for example a track (a tool that typically applies a layer of photosensitive resist (`photoresist') to a substrate and develops the exposed photoresist) or a metrology or inspection tool. Where applicable, the disclosure herein may be applied to such and other substrate processing tools. Further, the substrate may be processed more than once, for example in order to create a multi-layer IC, so that the term substrate used herein may also refer to a substrate that already includes multiple processed layers.

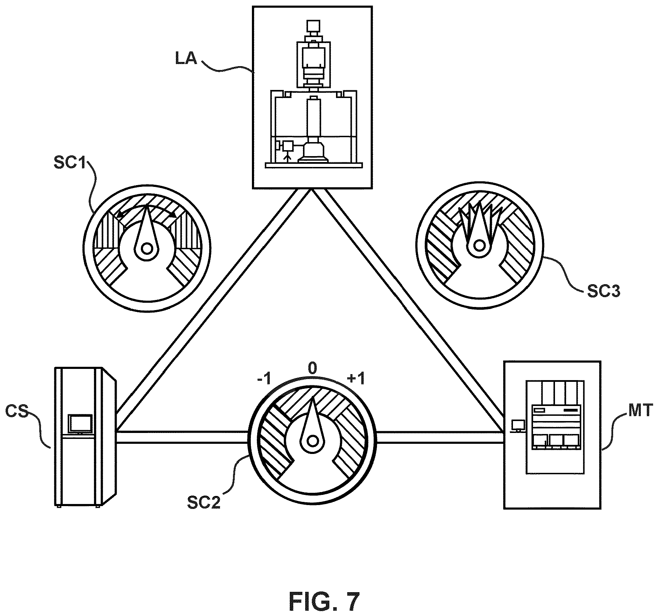

Fig. 7 depicts a schematic representation of holistic lithography, representing a cooperation between three technologies to optimize semiconductor processing. Typically, the patterning process in a lithographic apparatus LA is one of the most critical steps in the processing which requires high accuracy of dimensioning and placement of structures on the substrate. To ensure this high accuracy, three systems (in this example) may be combined in a so called "holistic" control environment as schematically depicted in Fig. 7. One of these systems is the lithographic apparatus LA which is (virtually) connected to a metrology apparatus (e.g., a metrology tool) MT (a second system), and to a computer system CS (a third system). A "holistic" environment may be configured to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific processing process yields a defined result (e.g. a functional semiconductor device) - typically within which the process parameters in the lithographic process or patterning process are allowed to vary.

The computer system CS may use a design layout to be patterned to predict which resolution enhancement techniques to use and to perform computational lithography simulations and calculations to determine which mask layout and lithographic apparatus settings achieve the largest overall process window of the patterning process (depicted in Fig. 7 by the double arrow in the first scale SC1). Typically, the resolution enhancement techniques are arranged to match the patterning possibilities of the lithographic apparatus LA. The computer system CS may also be used to detect where within the process window the lithographic apparatus LA is currently operating (e.g. using input from the metrology tool MT) to predict whether defects may be present due to e.g. sub-optimal processing (depicted in Fig. 7 by the arrow pointing "0" in the second scale SC2).

The metrology apparatus (tool) MT may provide input to the computer system CS to enable accurate simulations and predictions, and may provide feedback to the lithographic apparatus LA to identify possible drifts, e.g. in a calibration status of the lithographic apparatus LA (depicted in Fig. 7 by the multiple arrows in the third scale SC3).

In lithographic processes, it is desirable to make frequent measurements of the structures created, e.g., for process control and verification. Tools to make such measurements include metrology tool (apparatus) MT. Different types of metrology tools MT for making such measurements are known, including scanning electron microscopes or various forms of scatterometer metrology tools MT. Scatterometers are inspection instruments that allow measurements of the parameters of a lithographic process by having a sensor in the pupil or a conjugate plane with the pupil of the objective of the scatterometer, these measurements are usually referred as pupil-based measurements, or by having the sensor in the image plane or a plane conjugate with the image plane, in which case the measurements are usually referred as image or field-based measurements.

It is often desirable to be able to computationally determine how a patterning process would produce a desired pattern on a substrate. Computational determination may comprise simulation, for example. Simulations may be provided for one or more parts of the processing process. For example, it is desirable to be able to simulate the lithography process of transferring the patterning device pattern onto a resist layer of a substrate as well as the yielded pattern in that resist layer after development of the resist, simulate metrology operations such as the determination of overlay, and/or perform other simulations. The objective of a simulation may be to accurately predict, for example, metrology metrics (e.g., overlay, a critical dimension, a reconstruction of a three dimensional profile of features of a substrate, a dose or focus of a lithography apparatus at a moment when the features of the substrate were printed with the lithography apparatus, etc.), processing process parameters (e.g., edge placements, aerial image intensity slopes, sub-resolution assist features (SRAFs), etc.), and/or other information which can then be used to determine whether an intended or target design has been achieved.

Fig. 8 is a diagram of an example computer system CS that may be used for one or more of the operations described herein (e.g., one or more of the operations of method 500 shown in Fig. 5 and/or other operations). Computer system CS may be included in and/or be similar to and/or the same as one or more components of system 200 shown in Fig. 2 and described above (e.g., computer system CS may form some or all of the feedback controller described above). Computer system CS includes a bus BS or other communication mechanism for communicating information, and a processor PRO (or multiple processors similar to and/or the same as the processor(s) described above related to Fig. 2) coupled with bus BS for processing information. Computer system CS also includes a main memory MM, such as a random access memory (RAM) or other dynamic storage device, coupled to bus BS for storing information and instructions to be executed by processor PRO. Main memory MM also may be used for storing temporary variables or other intermediate information during execution of instructions by processor PRO. Computer system CS further includes a read only memory (ROM) ROM or other static storage device coupled to bus BS for storing static information and instructions for processor PRO. A storage device SD, such as a magnetic disk or optical disk, is provided and coupled to bus BS for storing information and instructions.

Computer system CS may be coupled via bus BS to a display DS, such as a flat panel or touch panel display or a cathode ray tube (CRT) for displaying information to a computer user or observer. An input device ID, including alphanumeric and other keys, is coupled to bus BS for communicating information and command selections to processor PRO. Another type of user input device is cursor control CC, such as a mouse, a trackball, or cursor direction keys for communicating direction information and command selections to processor PRO and for controlling cursor movement on display DS. This input device typically has two degrees of freedom in two axes, a first axis (e.g., x) and a second axis (e.g., y), that allows the device to specify positions in a plane. A touch panel (screen) display may also be used as an input device.

In some embodiments, all or some of one or more operations described herein may be performed by computer system CS in response to processor PRO executing one or more sequences of one or more instructions contained in main memory MM. Such instructions may be read into main memory MM from another computer-readable medium, such as storage device SD. Execution of the sequences of instructions included in main memory MM causes processor PRO to perform the process steps (operations) described herein. One or more processors in a multi-processing arrangement may also be employed to execute the sequences of instructions contained in main memory MM. In some embodiments, hard-wired circuitry may be used in place of or in combination with software instructions. Thus, the description herein is not limited to any specific combination of hardware circuitry and software.

The term "computer-readable medium" or "machine-readable medium" as used herein refers to any medium that participates in providing instructions to processor PRO for execution. Such a medium may take many forms, including but not limited to, non-volatile media, volatile media, and transmission media. Non-volatile media include, for example, optical or magnetic disks, such as storage device SD. Volatile media include dynamic memory, such as main memory MM. Transmission media include coaxial cables, copper wire and fiber optics, including the wires that comprise bus BS. Transmission media can also take the form of acoustic or light waves, such as those generated during radio frequency (RF) and infrared (IR) data communications. Computer-readable media can be non-transitory, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge. Non-transitory computer readable media can have instructions recorded thereon. The instructions, when executed by a computer, can implement any of the operations described herein. Transitory computer-readable media can include a carrier wave or other propagating electromagnetic signal, for example.

Various forms of computer readable media may be involved in carrying one or more sequences of one or more instructions to processor PRO for execution. For example, the instructions may initially be borne on a magnetic disk of a remote computer. The remote computer can load the instructions into its dynamic memory and send the instructions over a telephone line using a modem. A modem local to computer system CS can receive the data on the telephone line and use an infrared transmitter to convert the data to an infrared signal. An infrared detector coupled to bus BS can receive the data carried in the infrared signal and place the data on bus BS. Bus BS carries the data to main memory MM, from which processor PRO retrieves and executes the instructions. The instructions received by main memory MM may optionally be stored on storage device SD either before or after execution by processor PRO.

Computer system CS may also include a communication interface CI coupled to bus BS. Communication interface CI provides a two-way data communication coupling to a network link NDL that is connected to a local network LAN. For example, communication interface CI may be an integrated services digital network (ISDN) card or a modem to provide a data communication connection to a corresponding type of telephone line. As another example, communication interface CI may be a local area network (LAN) card to provide a data communication connection to a compatible LAN. Wireless links may also be implemented. In any such implementation, communication interface CI sends and receives electrical, electromagnetic, or optical signals that carry digital data streams representing various types of information.

Network link NDL typically provides data communication through one or more networks to other data devices. For example, network link NDL may provide a connection through local network LAN to a host computer HC. This can include data communication services provided through the worldwide packet data communication network, now commonly referred to as the "Internet" INT. Local network LAN (Internet) may use electrical, electromagnetic, or optical signals that carry digital data streams. The signals through the various networks and the signals on network data link NDL and through communication interface CI, which carry the digital data to and from computer system CS, are exemplary forms of carrier waves transporting the information.

Computer system CS can send messages and receive data, including program code, through the network(s), network data link NDL, and communication interface CI. In the Internet example, host computer HC might transmit a requested code for an application program through Internet INT, network data link NDL, local network LAN, and communication interface CI. One such downloaded application may provide all or part of a method described herein, for example. The received code may be executed by processor PRO as it is received, and/or stored in storage device SD, or other non-volatile storage for later execution. In this manner, computer system CS may obtain application code in the form of a carrier wave.

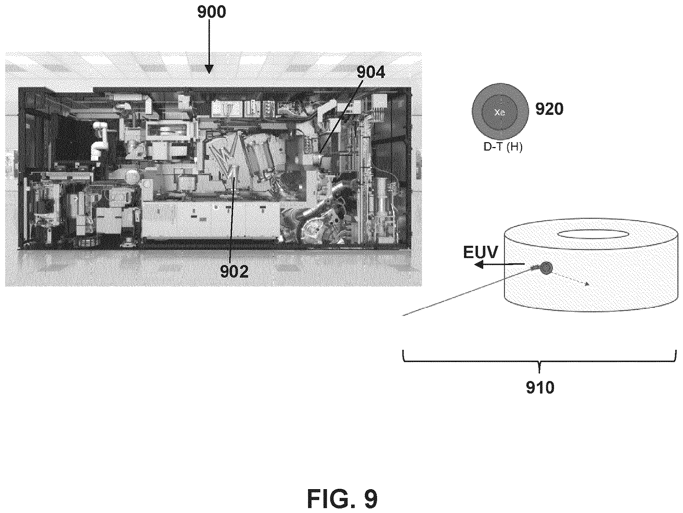

Fig. 9 illustrates an example of a pellet controlled D-T Tokamak EUV lithography light source and system (as described in various paragraphs above). Note that this is merely one possible example application of the components and principles described herein. Fig. 9 illustrates and EUV lithography system 900 (similar to and/or the same as the lithography apparatus LA described above) with mirror optics 902 and a large vacuum chamber 904. Fig. 9 also illustrates a new light source 910 (e.g., similar to and/or the same as source SO described in Fig. 6, but now utilizing a short wave ultraviolet excimer laser generating an electromagnetic radiation beam configured to locally ablate the surface of a fuel pellet to propel the pellet in a target direction toward a target location in a contained plasma (similar to and/or the same as what is shown in Fig. 3)). A generalized illustration of an optical path for EUV Xe light is also shown (labeled "EUV"). Finally, Fig. 9 illustrates an example pellet cross section 920, comprising an Xe core and a D-T(H) shell (note that these images are not to scale).

Various embodiments of the present systems and methods are disclosed in the subsequent list of numbered clauses. In the following, further features, characteristics, and exemplary technical solutions of the present disclosure will be described in terms of clauses that may be optionally claimed in any combination:
1. A laser controlled thermonuclear refueling system, comprising: an introducer configured to introduce a fuel pellet into a contained plasma of a thermonuclear fusion reactor; and one or more electromagnetic radiation beams configured to locally impinge upon a surface of the fuel pellet within the contained plasma to propel the pellet in a target direction and/or toward a target location in the contained plasma.
2. The system of clause 1, wherein the one or more electromagnetic radiation beams are generated by one or more short wave ultraviolet excimer lasers.
3. The system of any of the previous clauses, wherein locally impinging upon the surface of the fuel pellet comprises locally ablating at least a part of the surface of the fuel pellet.
4. The system of any of the previous clauses, wherein the one or more short wave ultraviolet excimer lasers are configured to locally ablate the surface of the fuel pellet to propel the pellet in the target direction toward the target location in the contained plasma to enhance plasma control for improved stability and thermonuclear fusion energy production.
5. The system of any of the previous clauses, wherein propelling the fuel pellet in the target direction toward the target location in the contained plasma steers the fuel pellet to or toward one or more points of highest temperature in the contained plasma to modulate a fusion rate and an amount of energy produced by the reactor.
6. The system of any of the previous clauses, wherein propelling the fuel pellet in the target direction toward the target location in the contained plasma is configured to adjust plasma currents to alter magnetic fields and produce electricity by magnetic induction.
7. The system of any of the previous clauses, wherein locally impinging the surface of the fuel pellet comprises locally ablating and evaporating a material at a point on the surface of the fuel pellet, causing compression, which propels the fuel pellet in the contained plasma, driven by consequent reaction force from material thrown off of or evaporated from the surface of the fuel pellet.
8. The system of any of the previous clauses, further comprising a feedback controller operatively coupled to the introducer and the one or more electromagnetic radiation beams, the feedback controller configured to operate with the introducer and the one or more electromagnetic radiation beams to controllably propel the fuel pellet.
9. The system of any of the previous clauses, the feedback controller comprising: one or more sensors configured to generate output signals conveying information related to a position of the fuel pellet in the contained plasma, plasma temperature, plasma magneto hydrodynamics, and/or fusion yield metrics; and one or more processors configured to control the introducer and/or the one or more electromagnetic radiation beams based on the output signals.
10. The system of any of the previous clauses, wherein the one or more sensors comprise one or more metrology lasers, an ion probe, and/or a backscattered light photodetector.
11. The system of any of the previous clauses, wherein the one or more processors are configured to control the introducer and/or the one or more electromagnetic radiation beams to control a net amount of energy produced, modulate a neutron fluence, control plasma edge or oscillation modes, increase reactor lifetime, and/or enhance overall energy production or consumption efficiency.
12. The system of any of the previous clauses, wherein the one or more processors are configured to adjust a direction, focus, or energy of the one or more electromagnetic radiation beams based on the output signals.
13. The system of any of the previous clauses, wherein the one or more electromagnetic radiation beams are generated by one or more short wave excimer lasers comprising ArF, KrF, and/or XeF excimer lasers.
14. The system of any of the previous clauses, wherein an electromagnetic radiation beam from the one or more short wave excimer lasers is pulsed, with constant or non-constant laser pulse widths ranging from femtosecond to nanosecond.
15. The system of any of the previous clauses, wherein the one or more short wave excimer lasers are configured to shape a pulse to enhance or control impingement and a subsequent direction of the fuel pellet.
16. The system of any of the previous clauses, wherein a laser beam from the one or more short wave excimer lasers is steady state.
17. The system of any of the previous clauses, wherein the fuel pellet comprises a frozen hydrogen isotope, or a mixture thereof.
18. The system of any of the previous clauses, wherein the fuel pellet comprises deuterium tritium, and/or surface layers and/or internal admixtures configured to affect optical or propulsive efficacy.
19. The system of any of the previous clauses, wherein the fuel pellet is pre-shaped to enhance a directional propelling of the pellet.
20. The system of any of the previous clauses, wherein the fuel pellet has an oblong profile, or a bullet shaped profile, and the one or electromagnetic radiation beams are configured to locally ablate the surface of the fuel pellet at or near a back or rear side of the fuel pellet.
21. The system of any of the previous clauses, wherein the one or more electromagnetic radiation beams are configured to locally ablate the surface of the fuel pellet at a first location to propel the fuel pellet in a first direction, and then direct a electromagnetic radiation beam through the fuel pellet to ablate an opposite or adjacent side of the fuel pellet, slowing or stopping propulsion of the fuel pellet in the first direction.
22. The system of any of the previous clauses, wherein the one or more electromagnetic radiation beams are further configured for preheating the fuel pellet and/or an environment surrounding the fuel pellet, in preparation for fusion.
23. The system of any of the previous clauses, wherein the one or more electromagnetic radiation beams are generated by two short wave excimer lasers, with a first short wave excimer laser of the two short wave excimer lasers configured to locally ablate the surface of the fuel pellet in a first location to propel the pellet in the target direction toward the target location in the contained plasma, and a second short wave excimer laser of the two short wave excimer lasers configured to locally ablate the surface of the fuel pellet in a second location to decelerate or stop movement of the fuel pellet in the contained plasma.
24. The system of any of the previous clauses, wherein the one or more electromagnetic radiation beams are generated by a plurality of short wave excimer lasers and configured to trap the fuel pellet at the target location in the contained plasma using multiple laser beams.
25. The system of any of the previous clauses, further comprising a charger configured to charge the fuel pellet with an electron beam or by laser photoionization to affect a trajectory of the fuel pellet in magnetic fields of the contained plasma.
26. The system of any of the previous clauses, wherein the one or more electromagnetic radiation beams are generated by a plurality of short wave excimer lasers, with at least one of the plurality of short wave excimer lasers configured for locally adjusting a characteristic of the contained plasma.
27. The system of any of the previous clauses, wherein propulsion of the fuel pellet by the one or more electromagnetic radiation beams is configured to be used as a kinetic driver for another fuel pellet in the contained plasma, and/or to adjust moveable elements within the reactor without opening a reactor enclosure.
28. The system of any of the previous clauses, wherein the fuel pellet has a laser-reflective surface, and/or is optically shaped such that as the fuel pellet passes an end of an open laser cavity during introduction, laser oscillation is physically triggered without a specific timing circuit.
29. The system of any of the previous clauses, wherein the fuel pellet has the laser-reflective surface, and the laser-reflective surface is configured to be ablated, or if sufficiently robust, configured to be used as a reflector such that the fuel pellet is driven by photon pressure, without ablation.
30. The system of any of the previous clauses, wherein the fuel pellet comprises an outer shell formed from Carbon (C), Gold (Au), or Platinum (Pt).
31. The system of any of the previous clauses, wherein a material used to form the outer shell is configured to adjust propulsion of the fuel pellet, and/or add particular impurities to the contained plasma with the material from the fuel pellet.
32. The system of any of the previous clauses, wherein the introducer comprises a gas-propelled pipe with the fuel pellet and one or more other pellets, or a laser-driven stack thereof.
33. The system of any of the previous clauses, wherein the introducer comprises a hopper of gravity-fed fuel pellets introduced from a top of a reaction chamber.
34. A laser controlled thermonuclear refueling method, comprising: introducing, with an introducer, a fuel pellet into a contained plasma of a thermonuclear fusion reactor; and locally impinging, with one or more electromagnetic radiation beams, upon a surface of the fuel pellet within the contained plasma to propel the pellet in a target direction and/or toward a target location in the contained plasma.
35. The method of clause 34, further comprising generating the one or more electromagnetic radiation beams by one or more short wave ultraviolet excimer lasers.
36. The method of any of the previous clauses, wherein locally impinging upon the surface of the fuel pellet comprises locally ablating the surface of the fuel pellet.
37. The method of any of the previous clauses, wherein the one or more short wave ultraviolet excimer lasers are configured to locally ablate the surface of the fuel pellet to propel the pellet in the target direction toward the target location in the contained plasma to enhance plasma control for improved stability and thermonuclear fusion energy production.
38. The method of any of the previous clauses, wherein propelling the fuel pellet in the target direction toward the target location in the contained plasma steers the fuel pellet to or toward one or more points of highest temperature in the contained plasma to modulate a fusion rate and an amount of energy produced by the reactor.
39. The method of any of the previous clauses, wherein propelling the fuel pellet in the target direction toward the target location in the contained plasma is configured to adjust plasma currents to alter magnetic fields and produce electricity by magnetic induction.
40. The method of any of the previous clauses, wherein locally impinging the surface of the fuel pellet comprises locally ablating and evaporating a material at a point on the surface of the fuel pellet, causing compression, which propels the fuel pellet in the contained plasma, driven by consequent reaction force from material thrown off of or evaporated from the surface of the fuel pellet.
41. The method of any of the previous clauses, further comprising controllably propelling the fuel pellet with a feedback controller operatively coupled to the introducer and the one or more electromagnetic radiation beams, the feedback controller configured to operate with the introducer and the one or more electromagnetic radiation beams.
42. The method of any of the previous clauses, the feedback controller comprising: one or more sensors configured to generate output signals conveying information related to a position of the fuel pellet in the contained plasma, plasma temperature, plasma magneto hydrodynamics, and/or fusion yield metrics; and one or more processors configured to control the introducer and/or the one or more electromagnetic radiation beams based on the output signals.
43. The method of any of the previous clauses, wherein the one or more sensors comprise one or more metrology lasers, an ion probe, and/or a backscattered light photodetector.
44. The method of any of the previous clauses, wherein the one or more processors are configured to control the introducer and/or the one or more electromagnetic radiation beams to control a net amount of energy produced, modulate a neutron fluence, control plasma edge or oscillation modes, increase reactor lifetime, and/or enhance overall energy production or consumption efficiency.
45. The method of any of the previous clauses, wherein the one or more processors are configured to adjust a direction, focus, or energy of the one or more electromagnetic radiation beams based on the output signals.
46. The method of any of the previous clauses, wherein the one or more electromagnetic radiation beams are generated by one or more short wave excimer lasers comprising ArF, KrF, and/or XeF excimer lasers.
47. The method of any of the previous clauses, wherein an electromagnetic radiation beam from the one or more short wave excimer lasers is pulsed, with constant or non-constant laser pulse widths ranging from femtosecond to nanosecond.
48. The method of any of the previous clauses, wherein the one or more short wave excimer lasers are configured to shape a pulse to enhance or control impingement and a subsequent direction of the fuel pellet.
49. The method of any of the previous clauses, wherein a laser beam from the one or more short wave excimer lasers is steady state.
50. The method of any of the previous clauses, wherein the fuel pellet comprises a frozen hydrogen isotope, or a mixture thereof.
51. The method of any of the previous clauses, wherein the fuel pellet comprises deuterium tritium, and/or surface layers and/or internal admixtures configured to affect optical or propulsive efficacy.
52. The method of any of the previous clauses, wherein the fuel pellet is pre-shaped to enhance a directional propelling of the pellet.
53. The method of any of the previous clauses, wherein the fuel pellet has an oblong profile, or a bullet shaped profile, and the one or electromagnetic radiation beams are configured to locally ablate the surface of the fuel pellet at or near a back or rear side of the fuel pellet.
54. The method of any of the previous clauses, further comprising locally ablating, with the one or more electromagnetic radiation beams, the surface of the fuel pellet at a first location to propel the fuel pellet in a first direction, and then direct a electromagnetic radiation beam through the fuel pellet to ablate an opposite or adjacent side of the fuel pellet, slowing or stopping propulsion of the fuel pellet in the first direction.
55. The method of any of the previous clauses, further comprising preheating, with the one or more electromagnetic radiation beams, the fuel pellet and/or an environment surrounding the fuel pellet, in preparation for fusion.
56. The method of any of the previous clauses, wherein the one or more electromagnetic radiation beams are generated by two short wave excimer lasers, with a first short wave excimer laser of the two short wave excimer lasers configured to locally ablate the surface of the fuel pellet in a first location to propel the pellet in the target direction toward the target location in the contained plasma, and a second short wave excimer laser of the two short wave excimer lasers configured to locally ablate the surface of the fuel pellet in a second location to decelerate or stop movement of the fuel pellet in the contained plasma.
57. The method of any of the previous clauses, wherein the one or more electromagnetic radiation beams are generated by a plurality of short wave excimer lasers and configured to trap the fuel pellet at the target location in the contained plasma using multiple laser beams.
58. The method of any of the previous clauses, further comprising charging, with a charger comprising an electron beam or laser photoionization, the fuel pellet to affect a trajectory of the fuel pellet in magnetic fields of the contained plasma.
59. The method of any of the previous clauses, wherein the one or more electromagnetic radiation beams are generated by a plurality of short wave excimer lasers, with at least one of the plurality of short wave excimer lasers configured for locally adjusting a characteristic of the contained plasma.
60. The method of any of the previous clauses, wherein propulsion of the fuel pellet by the one or more electromagnetic radiation beams is configured to be used as a kinetic driver for another fuel pellet in the contained plasma, and/or to adjust moveable elements within the reactor without opening a reactor enclosure.
61. The method of any of the previous clauses, wherein the fuel pellet has a laser-reflective surface, and/or is optically shaped such that as the fuel pellet passes an end of an open laser cavity during introduction, laser oscillation is physically triggered without a specific timing circuit.
62. The method of any of the previous clauses, wherein the fuel pellet has the laser-reflective surface, and the laser-reflective surface is configured to be ablated, or if sufficiently robust, configured to be used as a reflector such that the fuel pellet is driven by photon pressure, without ablation.
63. The method of any of the previous clauses, wherein the fuel pellet comprises an outer shell formed from Carbon (C), Gold (Au), or Platinum (Pt).
64. The method of any of the previous clauses, wherein a material used to form the outer shell is configured to adjust propulsion of the fuel pellet, and/or add particular impurities to the contained plasma with the material from the fuel pellet
65. The method of any of the previous clauses, wherein the introducer comprises a gas-propelled pipe with the fuel pellet and one or more other pellets, or a laser-driven stack thereof.
66. The method of any of the previous clauses, wherein the introducer comprises a hopper of gravity-fed fuel pellets introduced from a top of a reaction chamber.

The descriptions above are intended to be illustrative, not limiting. Thus, it will be apparent to one skilled in the art that modifications may be made as described without departing from the scope of the claims set out below.

## Claims

1. A laser controlled thermonuclear refueling system, comprising:
an introducer configured to introduce a fuel pellet into a contained plasma of a thermonuclear fusion reactor; and
one or more electromagnetic radiation beams configured to locally impinge upon a surface of the fuel pellet within the contained plasma to propel the pellet in a target direction and/or toward a target location in the contained plasma.

2. The system of claim 1, wherein the one or more electromagnetic radiation beams are generated by one or more short wave ultraviolet excimer lasers.

3. The system of claim 2, wherein locally impinging upon the surface of the fuel pellet comprises locally ablating at least a part of the surface of the fuel pellet.

4. The system of claim 3, wherein the one or more short wave ultraviolet excimer lasers are configured to locally ablate at least a part of the surface of the fuel pellet to propel the pellet in the target direction toward the target location in the contained plasma to enhance plasma control for improved stability and thermonuclear fusion energy production.

5. The system of claim 1, wherein propelling the fuel pellet in the target direction toward the target location in the contained plasma steers the fuel pellet to or toward one or more points of highest temperature in the contained plasma to modulate a fusion rate and an amount of energy produced by the reactor, and/or wherein propelling the fuel pellet in the target direction toward the target location in the contained plasma is configured to adjust plasma currents to alter magnetic fields and produce electricity by magnetic induction.

6. The system of claim 1, further comprising a feedback controller operatively coupled to the introducer and the one or more electromagnetic radiation beams, the feedback controller configured to operate with the introducer and the one or more electromagnetic radiation beams to controllably propel the fuel pellet.

7. The system of claim 6, the feedback controller comprising:
one or more sensors configured to generate output signals conveying information related to a position of the fuel pellet in the contained plasma, plasma temperature, plasma magneto hydrodynamics, and/or fusion yield metrics; and
one or more processors configured to control the introducer and/or the one or more electromagnetic radiation beams based on the output signals.

8. The system of claim 7, wherein the one or more sensors comprise one or more metrology lasers, an ion probe, and/or a backscattered light photodetector.

9. The system of claim 7, wherein the one or more processors are configured to control the introducer and/or the one or more electromagnetic radiation beams to control a net amount of energy produced, modulate a neutron fluence, control plasma edge or oscillation modes, increase reactor lifetime, and/or enhance overall energy production or consumption efficiency, and/or wherein the one or more processors are configured to adjust a direction, focus, or energy of the one or more electromagnetic radiation beams based on the output signals.

10. The system of claim 1, wherein the one or more electromagnetic radiation beams are generated by one or more short wave excimer lasers comprising ArF, KrF, and/or XeF excimer lasers.

11. The system of claim 10, wherein an electromagnetic radiation beam from the one or more short wave excimer lasers is pulsed, with constant or non-constant laser pulse widths ranging from femtosecond to nanosecond.

12. The system of claim 11, wherein the one or more short wave excimer lasers are configured to shape a pulse to enhance or control impingement and a subsequent direction of the fuel pellet.

13. The system of claim 1, wherein the fuel pellet comprises a frozen hydrogen isotope, or a mixture of different hydrogen isotopes.

14. The system of claim 1, wherein the fuel pellet comprises deuterium, tritium, and/or surface layers and/or internal admixtures configured to affect optical or propulsive efficacy, and/or wherein the fuel pellet is pre-shaped to enhance a directional propelling of the pellet, and/or wherein the fuel pellet has an oblong profile, or a bullet shaped profile, and the one or electromagnetic radiation beams are configured to locally ablate the surface of the fuel pellet at or near a back or rear side of the fuel pellet.

15. The system of claim 1, wherein the one or more electromagnetic radiation beams are configured to locally ablate the surface of the fuel pellet at a first location to propel the fuel pellet in a first direction, and then direct an electromagnetic radiation beam through the fuel pellet to ablate an opposite or adjacent side of the fuel pellet, slowing or stopping propulsion of the fuel pellet in the first direction, and/or wherein the one or more electromagnetic radiation beams are configured for preheating the fuel pellet and/or an environment surrounding the fuel pellet, in preparation for fusion.
